# FASCICULE DE BREVET EUROPEEN

(11) **EP 2 412 333 B1**
(45) Date de publication et mention de la délivrance du brevet: **19.03.2014**
(21) Numéro de dépôt: 11174698.8
(22) Date de dépôt: 20.07.2011
(51) Int. Cl.: A61C 1/00, G05G 1/30

(54) **Dispositif de commande sans fil pour commander un appareil chirurgical**
Drahtlose Steuervorrichtung zum Steuern eines chirurgischen Gerätes
Wireless control device for controlling a surgical device

(30) Priorité: 30.07.2010 FR 1056325
(43) Date de publication de la demande: 01.02.2012
(73) Titulaire: SARL Dentalhitec, 49280 Mazieres en Mauges (FR)
(72) Inventeur: Villette, Olivier, 49600 ANDREZE (FR); Guist'Hau, Vincent, 49300 CHOLET (FR)
(74) Mandataire: Thinat, Michel

(56) Documents cités:
- US-A1- 2005 147 940
- US-A1- 2005 251 228
- US-A1- 2007 166 662
- US-A1- 2007 254 261
- US-B1- 7 428 439

## Description

La présente demande concerne un dispositif de commande sans fil pour commander par le pied un appareil adapté pour plusieurs fonctions chirurgicales différentes.

Dans le domaine chirurgical en général et, dans le domaine de la chirurgie dentaire en particulier, les praticiens utilisent des appareils équipés de commutateurs ou interrupteurs actionnables par le pied. En effet, pour certaines interventions, il est nécessaire ou pour le moins recommandé d'utiliser des appareils comme par exemple des microscopes, des lampes UV et bien d'autres, que le praticien doit pouvoir mettre en marche, régler et arrêter lui-même. Un exemple en est la mise au point et le déplacement d'un microscope par lequel le praticien observe l'objet sur lequel il intervient. Ses mains étant occupés avec les gestes de l'intervention, il ne reste plus qu'à utiliser le pied pour commander l'appareil.

Ainsi, des commandes à pédale avec une ou plusieurs pédales ont été développées. Ces commandes ont été reliées à l'appareil à commander par un câble et étaient, de plus, reliées par un autre câble à une prise de courant ou à un autre type de source d'électricité.

Cependant, certaines interventions demandent au praticien de pouvoir se déplacer au cours de l'intervention. Dans ce cas, la présence de câbles peut être gênante voire même dangereuse lorsque le praticien doit se déplacer avec l'appareil à la main. Pour cette raison, des commandes sans fil ont été développées. Elles sont conçues pour envoyer des signaux radioélectriques ou optiques à l'appareil à commander qui les décode et effectue la tâche demandée. Un exemple en est décrit dans le document US-A-7 428 439.

Mais puisque les interventions peuvent durer un temps assez long, il faut être sûr que l'alimentation électrique de ces commandes sans fil puisse être assurée pendant ce temps long.

Un moyen pour y arriver est d'utiliser des modules électroniques à faible consommation électrique qui, de ce fait, ont de faibles dimensions. Un moyen supplémentaire est d'utiliser comme source d'électricité des moyens engendrant l'électricité au moment où l'émetteur de la commande sans fil en a besoin. Une telle source d'électricité a également de faibles dimensions.

Le problème qui s'est posé pour la conception d'un dispositif de commande répondant aux différentes exigences énoncées ci-avant, consistait à conjuguer la miniaturisation de la commande sans fil proprement dite avec la robustesse et les grandes dimensions nécessaires pour un actionnement par pied et notamment pour un actionnement « aveugle », c'est-à-dire sans que le praticien ait besoin de se concentrer sur une pose précise de son pied sur l'un ou l'autre des actionneurs de la commande sans fil, pour ne pas dévier son attention de la tâche principale qui est l'intervention chirurgicale.

En effet, lorsque l'appareil à commander n'a que deux fonctions et, de plus, n'est pas soumis à des contraintes de dimensions et d'énergie telles que celles énoncées plus haut, un dispositif de commande à deux pédales montées l'une à côté de l'autre et espacées l'une de l'autre, peut être actionné sans risque de confusion des pédales - ou de manière plus générale: des actionneurs - et sans risque d'un actionnement accidentel de l'un des actionneurs au moment où l'autre actionneur est visé.

Cependant, lorsque des moyens de commande de faibles dimensions doivent être actionnés au moyen d'organes adaptés aux dimensions et la rigidité des chaussures d'un praticien, les solutions utilisées avant l'invention ne satisfont pas.

Le problème qui en résulte est résolu par un dispositif de commande sans fil pour commander par le pied un appareil adapté pour plusieurs fonctions chirurgicales différentes, le dispositif comprenant, montés sur une embase, au moins deux modules adaptés pour engendrer un signal de commande spécifique pour chacune des applications chirurgicales, un émetteur pour émettre le signal de commande vers un récepteur de l'appareil et une source d'électricité pour alimenter l'émetteur en courant électrique, les modules, l'émetteur et la source d'électricité étant réunis dans un socle de réception de faibles dimensions, par exemple de l'ordre de 3 à 4 cm de côté, et au moins deux actionneurs adaptés pour être actionnés eux-mêmes par le pied et montés pivotants pour agir simultanément sur le module, l'émetteur et la source d'électricité.

Selon l'invention, les deux actionneurs sont montés pivotants autour de deux axes perpendiculaires l'une à l'autre et le dispositif de commande comprend une plaque de liaison mobile interposée entre l'un des actionneurs et le socle réunissant les modules, l'émetteur et la source d'électricité.

Les dispositions de l'invention permettent de positionner deux ou plus d'actionneurs de façon que leurs axes de basculement ou de pivotement soient très proches l'un de l'autre, ce qui correspond à la condition de pouvoir agir sur un ensemble d'éléments de faibles dimensions, et d'utiliser néanmoins des actionneurs de grandes dimensions dont les surfaces d'appui pour le pied soient suffisamment loin l'une de l'autre pour que le praticien puisse appuyer sur elles avec son pied sans risque de les confondre.

Avantageusement, un des actionneurs est monté basculant autour d'un premier axe et la plaque de liaison est montée basculante autour d'un deuxième axe qui est différent du premier axe et disposé parallèlement au premier axe. Les deux axes sont alors disposés perpendiculairement à l'axe de l'autre actionneur, ou à l'axe de chacun des autres actionneurs s'il y a par exemple trois actionneurs au total.

Autrement dit, lorsque le dispositif de commande comprend trois ou plus de modules pour engendrer un signal de commande spécifique pour chacune des applications chirurgicales, il comprend un troisième actionneur adapté pour pouvoir déclencher directement et simultanément le module correspondant, l'émetteur et la source d'électricité lorsqu'un signal de commande spécifique doit être engendré et transmis à l'appareil. Le troisième actionneur est alors monté pivotant autour d'un axe parallèle à l'axe de celui des deux autres actionneurs qui actionne le module correspondant sans plaque de liaison interposée.

En fonction du mode de réalisation choisi du dispositif de l'invention, l'actionneur auquel est associée la plaque de liaison comprend un plateau déporté adapté pour agir sur la plaque de liaison de façon à déclencher par son intermédiaire simultanément le module correspondant, l'émetteur et la source d'électricité lorsqu'un signal de commande spécifique doit être engendré et transmis à l'appareil.

L'embase sur laquelle les actionneurs sont montés occupe une surface de l'ordre de 20 cm de côté.

Le (ou les) module(s) adapté(s) pour engendrer un signal de commande spécifique pour chacune des applications chirurgicales, l'émetteur et la source d'électricité sont soit des moyens individuels adaptés pour pouvoir être placés ensemble dans le socle de réception prévu à cet effet, soit intégrés dans un seul élément ou boîtier dont les dimensions correspondent à celles du socle de réception.

La mise en oeuvre de la caractéristique mentionnée en dernier permet de réaliser un dispositif de commande à pédale compact et avec un risque le plus petit possible que le praticien appuie sur deux pédales en même temps.

D'autres caractéristiques et avantages de la présente invention ressortiront de la description d'un mode de réalisation ci-après, en référence aux dessins dans lesquels:
- la figure 1 représente en une vue de trois quarts un mode de réalisation de l'invention sous la forme d'un dispositif de commande à pédales,
- la figure 2 représente l'élément de fond du dispositif de l'invention,
- la figure 3 représente les actionneurs en une vue de trois quarts du côté intérieur du dispositif,
- la figure 4 représente l'actionneur à bascule en une vue de trois quarts,
- la figure 5 est une vue de face de l'actionneur basculant du dispositif de l'invention, et
- la figure 6 représente l'actionneur central en une vue de trois quarts du côté intérieur du dispositif.

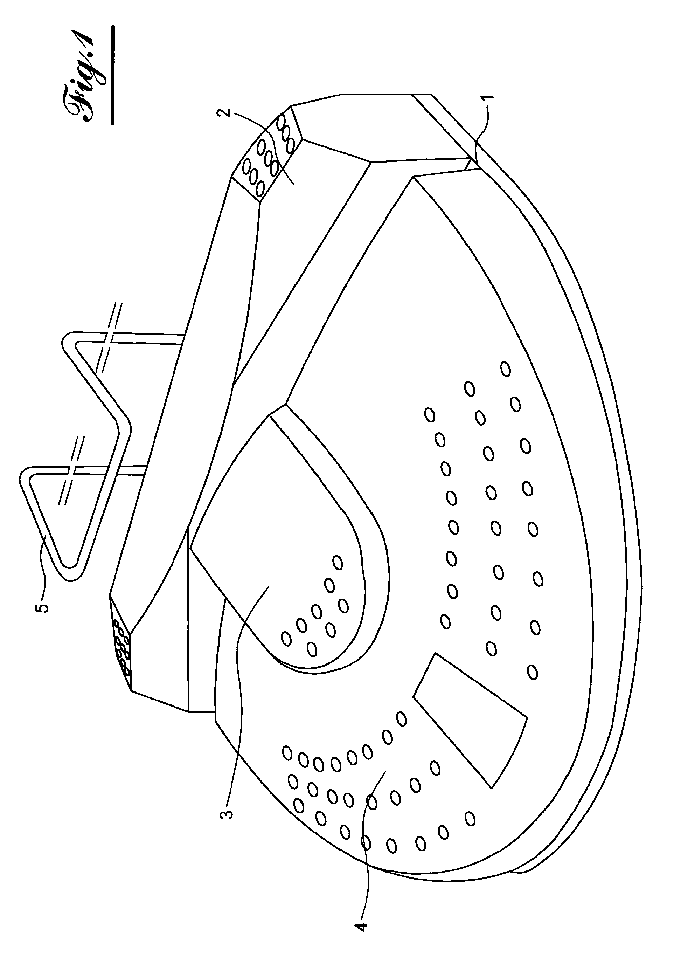

Selon l'exemple de réalisation représenté dans les dessins, et notamment en état assemblé sur la figure 1, le dispositif de commande selon l'invention comprend une embase 1 par laquelle le dispositif de l'invention peut reposer sur un sol, un premier actionneur 2 à bascule, un deuxième actionneur 3 et un troisième actionneur 4 montés pivotants et un arceau 5 fixé sur l'embase 1 et permettant à un praticien de déplacer le dispositif de commande pendant une intervention en le soulevant et le transportant avec son pied. La forme du dispositif de commande est approximativement celle d'un corps ayant un fond semi-circulaire sur lequel s'élèvent les actionneurs en forme de terrasses.

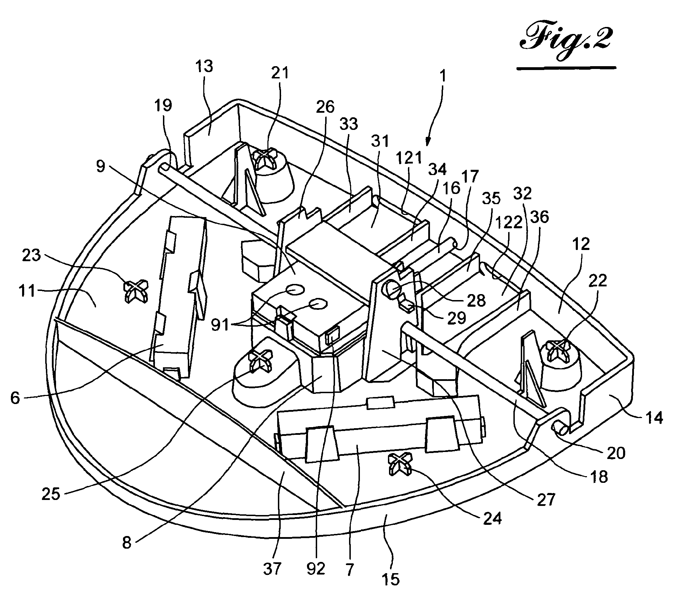

Comme le montre la figure 2, l'embase 1 présente essentiellement la forme d'une plaque de fond semi-circulaire 11 avec un rebord arrière faiblement courbe 12, deux rebords latéraux gauche 13 et droit 14 approximativement planes et un rebord avant courbe 15 dont la hauteur est inférieure à celle des trois autres rebords 12 à 14.

Notons dans ce contexte que les indications d'orientation telles que « avant », « arrière », « haut » et « bas » figurant dans la présente description se réfèrent à la position d'utilisation du dispositif telle que visible sur la figure 1.

L'embase comprend avantageusement mais non nécessairement des masses 6, 7 ayant un poids suffisant pour donner au dispositif de commande, notamment lorsque l'embase et les actionneurs sont réalisés en matière plastique, une bonne assise au sol, évitant le plus possible un déplacement intempestif du dispositif de commande.

L'embase 1 comprend également un socle 8 de réception d'une unité électronique 9 qui permet d'engendrer un signal électrique de commande et de l'émettre vers un appareil commandé par ce dispositif de commande. Cette unité 9 est actionnée par les actionneurs 2 à 4, comme cela sera décrit plus loin.

L'embase 1 comprend en outre un axe 16 par lequel est monté basculant l'actionneur 2 et un axe 17 par lequel est monté pivotant l'actionneur 4. L'axe 16 est inséré dans deux orifices dont l'un, référencé 17, est formé dans la paroi arrière 12 de l'embase 1 et dont l'autre (non représenté) est formé dans une paroi arrière du socle 8. L'axe 18 est inséré dans deux orifices 19, 20 formés dans les parois latérales 13, 14 de l'embase 1. On constate dès maintenant que l'axe 16 est disposé perpendiculairement à l'axe 18.

Selon une variante non représentée, l'actionneur à bascule 2 pourrait être remplacé par deux actionneurs montés pivotants dans des sens opposés autour de deux axes disposés perpendiculairement à l'axe 18. Une telle disposition, bien que plus complexe que le mode de réalisation décrit, permettrait également une conception compacte du dispositif de commande de l'invention.

L'embase 1 comprend par ailleurs des supports 21, 22 pour des ressorts hélicoïdaux (non représentés) remettant l'actionneur 2 en position de repos lorsque le praticien n'y appuie pas, des supports 23, 24 pour des ressorts hélicoïdaux (non représentés) remettant l'actionneur 4 en position de repos et un support 25 pour un ressort hélicoïdal (non représenté) remettant l'actionneur 3 en position de repos.

L'embase 1 comprend enfin deux bras 26, 27 s'élevant perpendiculairement vers le haut sur le fond 11 et présentant chacun une excroissance supérieure et une excroissance inférieure. Les excroissances supérieures, dont la figure 2 ne montre que l'excroissance 28 du bras 27, servent ensemble comme axe de pivotement pour l'actionneur 3. Et les excroissances inférieures, dont la figure 2 ne montre que l'excroissance 29, servent comme limiteurs de remontée lorsque l'actionneur 3 est poussé en position de repos par le ressort correspondant. Selon le mode de réalisation représenté, les bras 26, 27 sont accolés au socle 8.

Afin de pouvoir fixer l'arceau 5 sur l'embase 1, la paroi arrière 12 de cette dernière est pourvue de deux ouvertures 121, 122 par lesquelles l'arceau est introduit. Les extrémités libres de l'arceau 5 sont alors logées dans des espaces 31, 32 définis respectivement par des nervures 33, 34 et 35, 36. Une nervure 37, approximativement parallèle à la paroi arrière 12 de l'embase 1 sert à limiter le basculement vers le bas de l'actionneur 4.

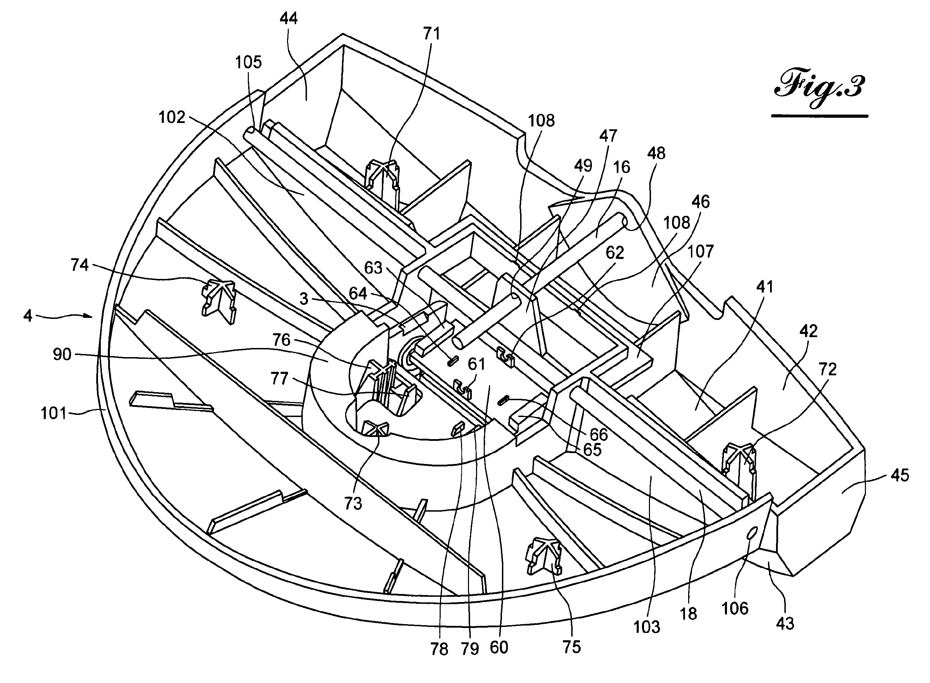

La figure 3 représente les actionneurs 2 à 4 par leur face inférieure en disposition de montage avec les axes 16 et 18 respectivement pour l'actionneur à bascule 2 et pour l'actionneur 4. Chacun de ces trois actionneurs est réalisé sous la forme d'un corps creux, ouvert vers le bas, avec une paroi sur laquelle appuie le praticien avec son pied et des parois latérales.

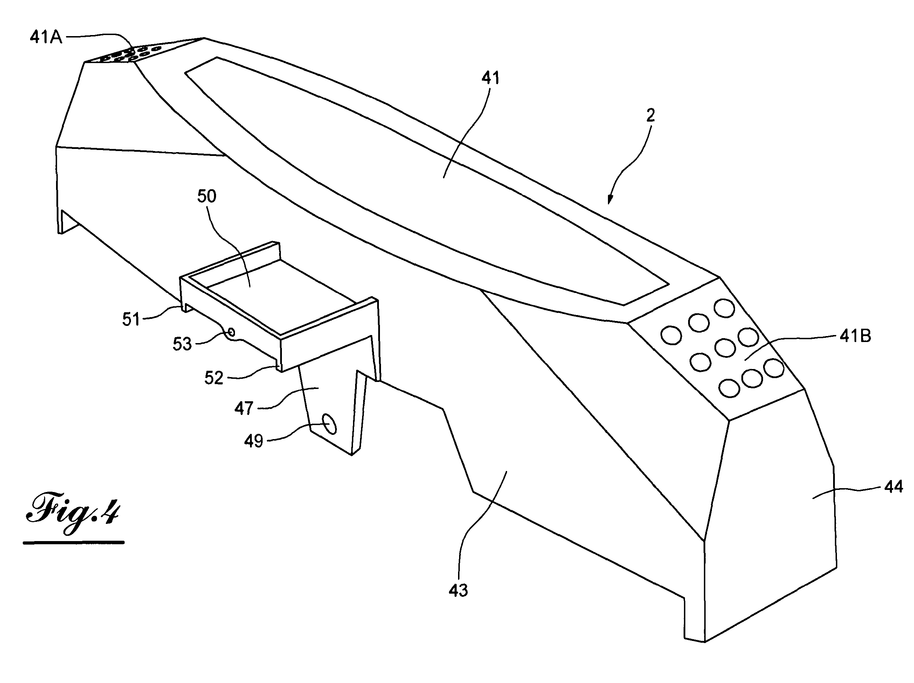

Ainsi, comme le montre en plus de détails la figure 4, l'actionneur à bascule 2 comprend une paroi d'appui 41 approximativement plane avec, sur la face supérieure, des surfaces d'appui 41A, 41B sur lesquelles le praticien appuie pour déclencher un signal de commande. L'actionneur 2 comprend en outre des parois arrière 42, avant 43, droite 44 et gauche 45 qui s'étendent approximativement perpendiculairement de la paroi 41. Les parois arrière 42 et avant 43 sont pourvues d'excroissances 46, 47 dans lesquelles sont pratiqués des orifices 48, 49 recevant l'axe 16.

L'actionneur 2 comprend également un plateau déporté 50 s'étendant horizontalement à partir de la paroi avant 43 et comportant sur sa face inférieure des nervures 51, 52 formées aux extrémités du plateau et orientées parallèlement à l'axe 16, ainsi qu'une nervure centrale 53 également orientée parallèlement à l'axe 16.

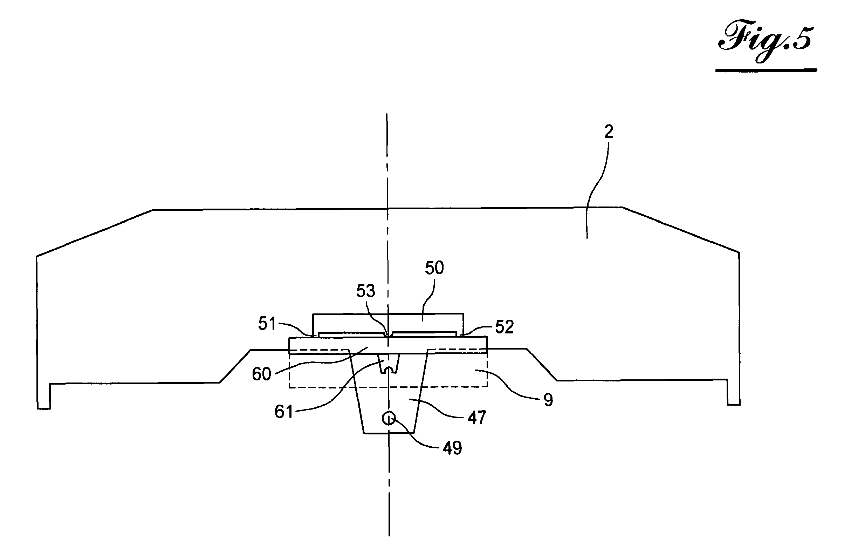

Au plateau 50 est assortie une plaque de liaison 60 portant sur sa face inférieure deux excroissances centrales 61, 62 formant l'axe de basculement de cette plaque, ainsi que des nervures 63, 64 d'un côté de l'axe de basculement 61, 62 et des nervures 65, 66 de l'autre côté. C'est par ces nervures que l'ensemble actionneur 2 / plateau de liaison 60 agit sur l'unité électronique 9 pour déclencher un signal de commande, comme expliqué en référence à la figure 5.

En effet, pour obtenir un dispositif de commande compact tout en minimisant le risque que le praticien appuie accidentellement sur deux actionneurs à la fois, le dispositif comprend une unité électronique 9 agencée dans un boîtier ayant des longueur et largeur de l'ordre de 3 à 4 cm alors que le dispositif de commande occupe une surface de l'ordre de 20 cm de côté. Selon le mode de réalisation représenté, l'unité électronique 9 comprend quatre modules adaptés pour engendrer un signal de commande spécifique pour chacune des applications chirurgicales prévues de l'appareil commandé. Ces quatre modules sont représentés par les contacteurs 91 visibles sur la figure 2. L'unité électronique 9 comprend également deux contacteurs 92 reliés à la source d'électricité dont un est visible sur la figure 2.

Afin de pouvoir déclencher à la fois la source d'électricité et un des modules générateurs de signal, l'ensemble actionneur 2 / plaque de liaison 60 et chacun des actionneurs 3, 4 est pourvu de moyens adaptés pour pouvoir appuyer à la fois sur un des contacteurs 91 et sur un des contacteurs 92. Ces moyens sont sommairement visibles sur la figure 3 et représentés en détails sur la figure 5.

La figure 5 représente l'ensemble actionneur à bascule 2 / plaque de liaison 60 en une vue de face en position de montage par rapport à l'unité électronique 9. Cette figure montre plus particulièrement la position des axes 16 de l'actionneur à bascule 2 et 61, 62 de la plaque de liaison 60.

Ne pouvant raisonnablement pas superposer, même en une disposition en « terrasses », plus que deux actionneurs - en l'occurrence les actionneurs 3 et 4 dédiés aux modules générateurs de signal avant - il fallait trouver une solution pour pouvoir actionner les deux modules générateurs de signal arrière. La solution trouvée est celle visible sur les figures 2 et 3, à savoir orienter l'axe du ou des actionneurs restants perpendiculairement aux axes des actionneurs 3, 4 afin de pouvoir placer le ou les actionneurs restants immédiatement derrière l'actionneur 4.

Selon le mode de réalisation représenté, les deux modules arrière sont actionnés indirectement respectivement par l'une et par l'autre des deux extrémités opposés de l'actionneur à bascule 2.

En effet, l'actionneur 2 n'agit pas lui-même sur les deux modules arrière, mais fait déplacer - grâce à la disposition désaxée de son axe 16 - le plateau 50 suivant un trajet va-et-vient en arc de cercle. De cette manière, le plateau 50 glisse sur la plaque de liaison 60 et la fait basculer dans un sens ou l'autre. Ainsi, en appuyant sur l'extrémité droite de l'actionneur à bascule 2, le plateau 50 glisse vers la droite et fait basculer la plaque de liaison 60 vers la droite, ce qui fait appuyer les nervures 63, 64 sur le contacteur du module arrière droit de l'unité électronique 9. De manière analogue, le fait d'appuyer sur l'extrémité gauche de l'actionneur 2 fait appuyer la plaque de liaison 60 sur le contacteur du module arrière gauche de l'unité électronique 9. Le retour de l'actionneur 2 en position de repos est assuré par deux ressorts hélicoïdaux (non représentés) maintenus entre les supports 21, 22 de l'embase 1 et des supports correspondants 71, 72 formés sur la face inférieure de la paroi 41 de l'actionneur 2.

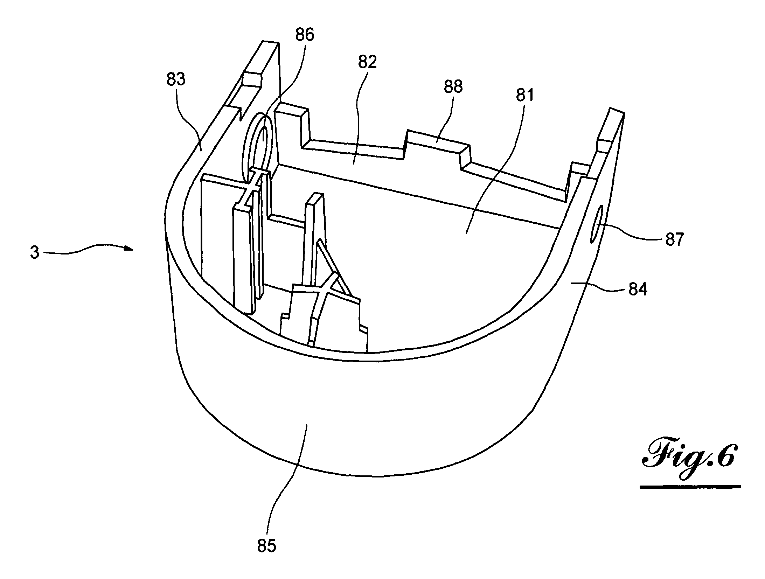

Comme le montre en plus de détails la figure 6, l'actionneur 3 comprend une paroi d'appui 81 approximativement plane sur laquelle le praticien appuie pour déclencher un signal de commande. L'actionneur 3 comprend en outre une paroi arrière 82, deux parois latérales approximativement planes 83, 84 et une paroi avant courbe 85 qui s'étendent approximativement perpendiculairement de la paroi 81. Les parois latérales 83, 84 sont pourvues d'orifices 86, 87 recevant les excroissances 28 des bras 26, 27 de l'embase 1. Les excroissances 28 forment l'axe de pivotement de l'actionneur 3. L'actionneur est également pourvue d'une excroissance centrale 88 s'étendant vers la bas à partir de la paroi arrière 82 et servant comme limiteur supplémentaire de remontée, en plus des excroissance 29 des bras 26, 27, lorsque l'actionneur 3 est poussé en position de repos par le ressort. En position de repos des actionneurs 2 et 3, l'excroissance 88 reste légèrement au-dessus de la face supérieure du plateau 50 de l'actionneur à bascule 2.

L'actionneur 3 agit directement sur le contacteur 91 du module avant droit de l'unité électronique 9 et est superposé à l'actionneur 4 agissant directement sur le contacteur 91 du module avant gauche. De ce fait, l'actionneur 3 ne comporte pas de nervures agissant simultanément sur le contacteur 91 et le contacteur 92 correspondant mais des doigts 76, 77 formés à cet effet à l'intérieur de l'actionneur 3. Selon le mode de réalisation représenté, mais de manière nullement limitative, les doigts 76, 77 s'étendent à partir de la paroi sur laquelle le praticien appuie, perpendiculairement vers le bas à l'intérieur de l'actionneur 3 et traversent l'actionneur 4 par une ouverture prévue à cet effet. Le retour à la position de repos de cet actionneur est assuré par un ressort hélicoïdal (non représenté) maintenu entre le support 25 de l'embase 1 et un support 73 de l'actionneur 3.

Comme le montre en plus de détails la figure 3, l'actionneur 4 comprend une paroi d'appui 101 sur laquelle le praticien appuie pour déclencher un signal de commande. L'actionneur 4 comprend en outre des parois arrière 102, 103 interrompues par un arceau 107 et une paroi avant courbe 104 pourvue sur les côtés droit et gauche, proche des parois arrière 102, 103, d'orifices 105, 106 recevant l'axe de pivotement 18.

L'actionneur 4 comporte en son milieu une rainure large et arquée 90 (vue par en-dessous sur la figure 3) dont la forme et les dimensions sont adaptées pour pouvoir Y recevoir l'actionneur 3. Afin de pouvoir agir directement sur les contacteurs 91, 92 du module générateur de signal avant gauche de l'unité électronique 9, l'actionneur 4 est pourvu, d'une nervure 78 et d'un étagement 79.

Le retour à la position de repos de cet actionneur est assuré par un ressort hélicoïdal (non représenté) maintenu entre les supports 23, 24 de l'embase 1 et des supports 74, 75 de l'actionneur 4.

L'arceau 107 est un mode de réalisation possible d'un limiteur de remontée intervenant, en prenant appui sur les nervures 34, 35 de l'embase 1, lorsque l'actionneur 4 est poussé en position de repos par les ressorts. Eventuellement, l'arceau 107 peut être pourvu d'excroissances 108 prolongeant l'arceau ponctuellement vers le bas.

En ce qui concernent l'utilisation et le fonctionnement du dispositif de commande, le praticien peut appuyer individuellement sur chaque extrémité de l'actionneur à bascule 2 et sur les actionneurs 3 et 4 avec la même position au sol du dispositif et sans risque d'appuyer par erreur sur deux actionneurs en même temps. De plus, l'unité électronique 9 et plus particulièrement chacun des modules générateurs de signal, peut être programmé de différentes manières afin de pouvoir engendrer davantage de signaux différents qu'il y a modules dans l'unité 9. Ainsi, par exemple, le signal engendré par un module peut varier en fonction du nombre de fois que le praticien appuie rapidement sur l'actionneur correspondant. L'exemple présenté de quatre modules générateurs de signal n'est donc pas à considérer comme limitatif. Ensuite, chaque signal est acheminé vers l'émetteur qui est alimenté par la source d'électricité simultanément avec le module ou avec un léger décalage.

## Revendications

1. Dispositif de commande sans fil pour commander par le pied un appareil adapté pour plusieurs fonctions chirurgicales différentes, le dispositif comprenant, montés sur une embase (1), au moins deux modules (91) adaptés pour engendrer un signal de commande spécifique pour chacune des applications chirurgicales, un émetteur pour émettre le signal de commande vers un récepteur de l'appareil et une source d'électricité pour alimenter l'émetteur en courant électrique, les modules, l'émetteur et la source d'électricité étant réunis dans un socle de réception (8) ayant des dimensions de l'ordre de 3 à 4 cm de côté, et au moins deux actionneurs (2, 3) adaptés pour être actionnés eux-mêmes par le pied et montés pivotants pour agir simultanément sur le module, l'émetteur et la source d'électricité, **caractérisé en ce que** les deux actionneurs (2, 3) sont montés pivotants autour de deux axes (17, 28) perpendiculaires l'une à l'autre et **en ce que** le dispositif de commande comprend une plaque de liaison (60) mobile interposée entre l'un (2) des actionneurs (2, 3) et le socle (8) réunissant les modules, l'émetteur et la source d'électricité.

2. Dispositif de commande selon la revendication 1, **caractérisé en ce que** l'actionneur (2) auquel est associée la plaque de liaison (60) comprend un plateau déporté (50) adapté pour agir sur la plaque de liaison (60) de façon à déclencher par son intermédiaire simultanément le module correspondant, l'émetteur et la source d'électricité lorsqu'un signal de commande spécifique doit être engendré et transmis à l'appareil.

3. Dispositif de commande selon la revendication 1 ou 2, **caractérisé en ce que** la plaque de liaison (60) est montée basculante autour d'un axe (61, 62) différent de, et parallèle à, l'axe (16) de l'actionneur (2) auquel elle est associée.

4. Dispositif de commande selon l'une quelconque des revendications 1 à 3 avec au moins trois modules (91) adaptés pour engendrer un signal de commande spécifique pour chacune des applications chirurgicales, **caractérisé en ce qu'**il comprend un troisième actionneur (4) adapté pour pouvoir déclencher directement et simultanément le module correspondant, l'émetteur et la source d'électricité lorsqu'un signal de commande spécifique doit être engendré et transmis à l'appareil, le troisième actionneur (4) étant monté pivotant autour d'un axe (18) parallèle à l'axe (28) de celui (3) des deux autres actionneurs (2, 3) qui actionne le module correspondant sans plaque de liaison (60) interposée.

5. Dispositif de commande selon l'une quelconque des revendications 1 à 3, **caractérisé en ce que** l'embase (1) sur laquelle les actionneurs (2, 3, 4) sont montés occupe une surface de l'ordre de 20 cm de côté.

## Patentansprüche

1. Drahtlose Steuervorrichtung zum Steuern eines Geräts, das für mehrere unterschiedliche chirurgische Funktionen geeignet ist, mit dem Fuß, wobei die Vorrichtung, die auf einer Basis (1) montiert ist, mindestens zwei Module (91), die zum Erzeugen eines für jede der chirurgischen Anwendungen speziellen Steuersignals geeignet sind, einen Sender, um das Steuersignal an einen Empfänger des Geräts zu senden und eine Stromquelle, um den Sender mit elektrischem Strom zu versorgen, wobei die Module, der Sender und die Stromquelle in einem Aufnahmesockel (8) vereint sind, der Abmessungen in der Größenordnung von 3 bis 4 cm Seitenlänge hat, und mindestens zwei Aktuatoren (2, 3), die geeignet sind, selbst von dem Fuß betätigt zu sein und schwenkend montiert sind, um gleichzeitig auf das Modul, den Sender und die Stromquelle einzuwirken, umfasst, **dadurch gekennzeichnet, dass** die zwei Aktuatoren (2, 3) schwenkbar um zwei zueinander lotrechte Achsen (17, 28) montiert sind und dass die Steuervorrichtung eine bewegliche Verbindungsplatte (60) umfasst, die zwischen einem (2) der Aktuatoren (2, 3) und dem Sockel (8) zwischengestellt ist, der die Module, den Sender und die Stromquelle vereint.

2. Steuervorrichtung nach Anspruch 1, **dadurch gekennzeichnet, dass** der Aktuator (2), dem die Verbindungsplatte (60) zugeordnet ist, eine versetzte Platte (50) umfasst, die geeignet ist, um auf die Verbindungsplatte (60) derart einzuwirken, dass durch sie gleichzeitig das entsprechende Modul, der Sender und die Stromquelle ausgelöst werden, wenn ein spezielles Steuersignal erzeugt und an das Gerät übertragen werden muss.

3. Steuervorrichtung nach Anspruch 1 oder 2, **dadurch gekennzeichnet, dass** die Verbindungsplatte (60) um eine Achse (61, 62) kippend montiert ist, die sich von der Achse (16) des Aktuators (2), dem sie zugeordnet ist, unterscheidet und parallel zu dieser ist.

4. Steuervorrichtung nach einem der Ansprüche 1 bis 3 mit mindestens drei Modulen (91), die zum Erzeugen eines für jede der chirurgischen Anwendungen speziellen Steuersignals geeignet sind, **dadurch gekennzeichnet, dass** sie einen dritten Aktuator (4) umfasst, der ausgebildet ist, um direkt und gleichzeitig das entsprechende Modul, den Sender und die Stromquelle auslösen zu können, wenn ein spezielles Steuersignal erzeugt und an das Gerät übertragen werden muss, wobei der dritte Aktuator (4) schwenkbar um eine Achse (18) parallel zur Achse (28) desjenigen (3) der zwei anderen Aktuatoren (2, 3) montiert ist, der das entsprechende Modul ohne zwischengestellte Verbindungsplatte (60) betätigt.

5. Steuervorrichtung nach einem der Ansprüche 1 bis 3, **dadurch gekennzeichnet, dass** die Basis (1), auf der die Aktuatoren (2, 3, 4) montiert sind, eine Fläche in der Größenordnung von 20 cm Seitenlänge hat.

## Claims

1. A wireless control device for using the foot to control an apparatus suitable for performing several different surgical functions, the device comprising, mounted on a base (1), at least two modules (91) suitable for creating a specific control signal for each of the surgical applications, a transmitter for sending the control signal to a receiver of the apparatus, and a power source for supplying electrical current to the transmitter, the modules, transmitter and power source being combined in a receiving base (8) having dimensions of approximately 3 to 4 cm per side, and at least two actuators (2, 3) suitable for being actuated themselves using a foot and mounted pivotably to act simultaneously on the module, transmitter and power source, **characterized in that** the two actuators (2, 3) are mounted pivoting around two axles (17, 28) that are perpendicular to each other and **in that** the control device comprises a moving connecting plate (60) interposed between one end (2) of the actuators (2, 3) and the base (8) combining the modules, transmitter and power source.

2. The control device according to claim 1, **characterized in that** the actuator (2) with which the connecting plate (60) is associated comprises an offset tray (50) suitable for acting on the connecting plate (60) so as to use it to simultaneously activate the corresponding module, the transmitter and the power source when a specific control signal must be created and sent to the apparatus.

3. The control device according to claim 1 or claim 2, **characterized in that** the connecting plate (60) is mounted tilting around an axle (61, 62) different from, and parallel to, the axle (16) of the actuator (2) with which it is associated.

4. The control device according to any one of claims 1 to 3, with at least three modules (91) suitable for creating a specific control signal for each of the surgical applications, **characterized in that** it comprises a third actuator (4) able to activate the corresponding module, the transmitter and the power source directly and simultaneously when a specific control signal must be created and sent to the apparatus, the third actuator (4) being mounted pivotably around an axle (18) parallel to the axle (28) of the actuator (3) from among the other two actuators (2, 3) that actuates the corresponding module without an interposed connecting plate (60).

5. The control device according to any one of claims 1 to 3, **characterized in that** the base (1) on which the actuators (2, 3, 4) are mounted occupies a surface area of approximately 20 cm per side.
